# FASCICULE DE BREVET EUROPEEN

(11) **EP 2 651 694 B1**
(45) Date de publication et mention de la délivrance du brevet: **04.05.2016**
(21) Numéro de dépôt: 11807714.8
(22) Date de dépôt: 14.12.2011
(51) Int. Cl.: B60Q 3/00, B60Q 3/04, F21S 8/00, G02B 6/00, G02B 6/42, F21V 5/02

(54) **TÉMOIN LUMINEUX**
BLINKLICHT
INDICATOR LIGHT

(30) Priorité: 14.12.2010 FR 1004879
(43) Date de publication de la demande: 23.10.2013
(73) Titulaire: Valeo Systemes Thermiques, 78320 Le Mesnil Saint Denis (FR)
(72) Inventeur: THORAILLER, Maryline, F-94490 Ormesson Sur Marne (FR)
(74) Mandataire: Pothmann, Karsten
(86) Numéro de dépôt international: PCT/FR2011/000646
(87) Numéro de publication internationale: WO 2012/080595

(56) Documents cités:
- GB-A- 966 357
- US-A- 5 775 792
- US-B1- 6 819 505

## Description

L'invention concerne un témoin ou voyant lumineux, en particulier de tableau de bord de véhicule, avertissant un utilisateur au moyen d'un signal lumineux.

Il est connu de réaliser des témoins lumineux au moyen d'un guide optique, qui guide la lumière émise par une source lumineuse, généralement une diode électroluminescente (DEL), vers une surface à éclaireur (voir US5775792 et US6819505).

Le guide optique se présente généralement sous forme d'une pièce de plastique transparent allongée, globalement parallélépipédique ou tubulaire. Il possède une surface ou dioptre d'entrée, dirigée vers la source lumineuse, et une surface ou dioptre de sortie, correspondant à la surface à éclairer du voyant. La surface à éclairer peut en outre comporter des masques ou marquages formant des pictogrammes qui ressortiront à l'éclairage, visant à rendre reconnaissable la fonction ou alerte à laquelle se rapporte le voyant lumineux.

Les guides optiques à dioptre d'entrée plan génèrent une forte illumination autour de l'axe du guide, mais un observateur situé sur le côté du témoin lumineux ne reçoit qu'une faible partie de la luminosité. Pour être conforme aux exigences des constructeurs, un témoin lumineux comportant un tel guide optique nécessite une source lumineuse puissante. Or les sources lumineuses puissantes sont plus chères, nécessitent un plus grand apport en puissance, et génèrent plus de chaleur qui doit être évacuée.

Il est connu de réaliser le dioptre d'entrée de forme hémisphérique, ou du moins arrondie, concave afin de répartir également la puissance rayonnée par le témoin lumineux sur tous les angles possibles d'observation.

La luminosité est alors mieux répartie sur les côtés, mais la puissance diffusée dans la direction particulière d'un observateur est plus faible à puissance d'éclairage égale.

En particulier dans le cas d'un tableau de bord de véhicule, la position des observateurs, conducteur et passager, est connue et déterminée par rapport au témoins. Aussi, une majeure partie de la puissance rayonnée est perdue, puisque le témoin lumineux émet aussi dans des directions inutiles, notamment du soi et du plafond du véhicule, ou aucun utilisateur ne se présente. Pour un rendu visuel amélioré, il est donc toujours nécessaire de recourir à des diodes électroluminescentes de puissance relativement élevée.

De plus, les voyants lumineux équipés de tels guides optiques à dioptres d'entrée à surface arrondie ou plane présentent, du fait de la forme des diodes, au centre de la surface éclairée une zone d'ombre moins éclairée, en observation de face, qui amoindrit le rendu visuel et esthétique du témoin.

Un tableau de bord de véhicule comporte généralement une pluralité de tels témoins, de l'ordre d'une dizaine. Les diodes de puissance élevée représentent donc un surcoût non négligeable. De plus, leur consommation importante sollicite l'alimentation électrique, et des dispositifs de dissipation de la chaleur produite doivent être prévus.

Afin de remédier au moins partiellement aux inconvénients précédemment cités, l'invention a pour objet un témoin lumineux comportant :
une source lumineuse,
un guide optique, rigide et formant une colonne, comportant :
   ▪ un dioptre d'entrée délimitant la surface inférieure du guide optique et par lequel la lumière de la source est admise dans le guide optique,
   ▪ un dioptre de sortie délimitant la surface supérieure du guide optique et par lequel la lumière de la source est émise,
   ▪ une section rectangulaire transversale sur au moins une majeure partie de sa longueur,
caractérisé en ce que pour au moins une ouverture angulaire centrée sur une direction privilégiée de sortie, la source est disposée du côté du dioptre d'entrée, à l'intersection entre l'axe longitudinal du guide optique et le trajet d'un rayon virtuel inverse, correspondant au trajet d'un rayon lumineux émis par la source en sens inverse, le rayon virtuel inverse entrant dans le guide optique par le dioptre de sortie en étant incident selon la direction privilégiée, réfracté par le dioptre de sortie et réfléchi au moins une fois par les parois latérales du guide optique, et en ce que le dioptre d'entrée du guide optique comporte une portion de surface plane, disposée sur le trajet dudit rayon virtuel et perpendiculaire à celui-ci au niveau du dioptre d'entrée.

Le témoin lumineux ainsi obtenu concentre la puissance rayonnée dans une direction où elle sera perçue par l'utilisateur, tandis que les angles ne correspondant pas à des positions attendues d'utilisateurs seront moins éclairés, voire pas du tout.

Pour un même rendu du point de vue de l'utilisateur, il sera ainsi possible d'utiliser une diode électroluminescente de puissance moindre, et donc moins coûteuse, moins consommatrice et produisant moins de chaleur à évacuer. De plus, on observe la disparition de la zone d'ombre au centre de la surface éclairée.

Le témoin lumineux peut en outre présenter une ou plusieurs des caractéristiques suivantes, prises seules ou en combinaison.

La source lumineuse est une diode électroluminescente.

Le guide optique est réalisé en plastique dur.

Le plastique dur est du polyméthacrylate de méthyle.

Le plastique dur est du polycarbonate.

Les parois latérales et le dioptre d'entrée sont polis avec un rendu de surface inférieur à 0,05 microns.

Le guide optique présente une portion extrémale côté dioptre de sortie à section transversale de forme circulaire, la portion extrémale à section circulaire étant raccordée à la portion de section rectangulaire par une transition progressive de la forme de la section transversale.

Le dioptre d'entrée du guide optique comporte une pluralité portions de surface planes, chacune étant perpendiculaire à un rayon virtuel inverse, incident selon une direction privilégiée parmi plusieurs directions privilégiées.

Le dioptre d'entrée du guide optique comporte une pluralité de portions de surface planes parallèles entre elles et à la portion de surface plane orientée perpendiculairement à un rayon virtuel inverse au niveau du dioptre d'entrée, comprises dans une épaisseur prédéfinie et séparées par des surfaces perpendiculaires au dioptre de sortie.

Le dioptre d'entrée du guide optique comporte une pluralité de portions de surface planes parallèles entre elles et à la portion de surface plane orientée perpendiculairement à un rayon virtuel inverse au niveau du dioptre d'entrée, séparées par des surfaces parallèles au dioptre de sortie.

La longueur du guide optique entre le dioptre de sortie et le dioptre d'entrée est telle que le rayon virtuel inverse est réfléchi une fois sur une paroi latérale.

L'invention a aussi pour objet un tableau de bord de véhicule automobile, caractérisé en ce qu'il comporte au moins un témoin lumineux tel que précédemment décrit, et en ce que la direction privilégiée correspond à la position attendue d'un utilisateur du véhicule.

En particulier, le tableau de bord peut comporter au moins un témoin lumineux pour lequel les directions privilégiées sont au nombre de deux, et correspondent aux positions attendues du conducteur du véhicule et du passager du véhicule dans l'habitacle.

D'autres avantages et caractéristiques apparaîtront à la lecture de la description des figures suivantes, parmi lesquelles :
- la figure 1 est une vue en coupe schématique d'un guide optique de témoin lumineux selon l'invention,
- la figure 2 est une vue schématique de dessus de l'intérieur de l'habitacle d'un véhicule comportant un témoin lumineux selon l'invention,
- la figure 3a est une vue schématique de face d'une variante du témoin lumineux selon l'invention,
- la figure 3b est une vue schématique de profil de la variante de la figure 3a,
- la figure 4 est une vue en perspective d'une autre variante de guide optique,
- la figure 5 est une vue en coupe schématique d'un mode de réalisation alternatif d'un guide optique de témoin lumineux selon l'invention,
- la figure 6 est une vue en coupe schématique d'un second mode de réalisation alternatif d'un guide optique de témoin lumineux selon l'invention.

Sur toutes les figures les mêmes références se rapportent aux mêmes éléments.

L'invention concerne un témoin lumineux, en particulier de tableau de bord de véhicule. Le témoin lumineux 1 comporte une source lumineuse 3 et un guide optique 5, ou guide de lumière.

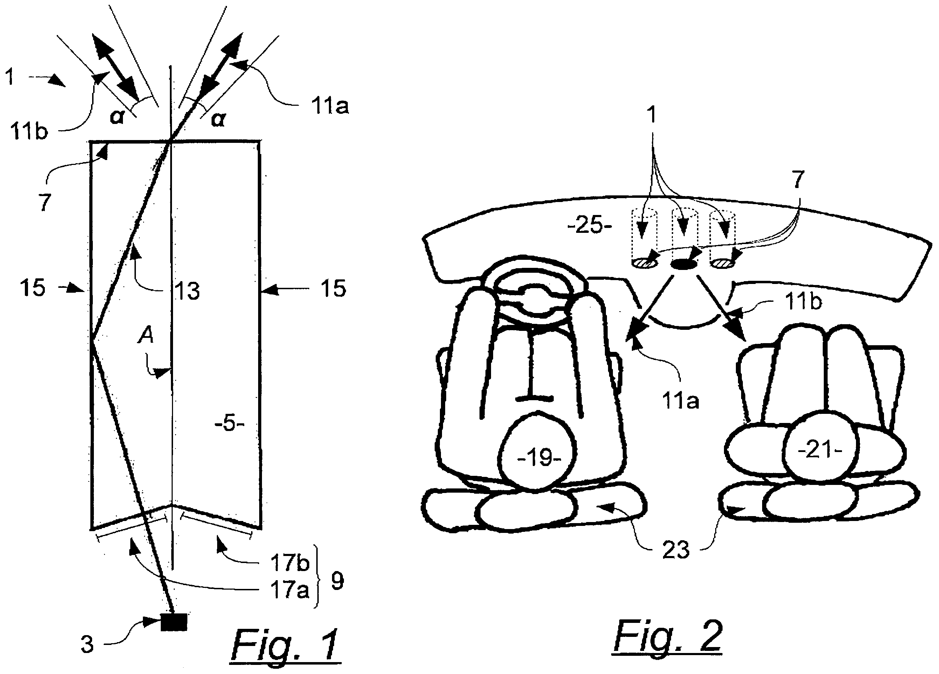

Sur la figure 1, on peut voir que le guide optique 5 est de forme générale allongée, formant une colonne présentant un axe longitudinal *A*. Sa surface supérieure, positionnée côté utilisateur, est par exemple plane, et forme un dioptre de sortie 7, par lequel la lumière de la source 3 est émise. Alternativement, le dioptre de sortie peut être une surface courbe, notamment légèrement bombée. La surface inférieure du guide optique 5, positionnée côté source lumineuse 3, forme un dioptre d'entrée 9, par lequel la lumière de la source 3 est admise dans le guide optique 5. Le guide optique 5 est de section rectangulaire, éventuellement carrée, sur la majeure partie de sa longueur, voire la totalité comme dans le cas présent. Cette portion de longueur à section transversale rectangulaire a pour axe central l'axe longitudinal *A*.

La source lumineuse 3 est par exemple une diode électroluminescente (DEL). Le guide optique est préférentiellement réalisé en plastique dur, par exemple du polyméthacrylate de méthyle (PMMA ou Plexiglas™), ou bien du polycarbonate.

Pour une ouverture angulaire *α* centrée sur une direction privilégiée 11a de sortie, on peut définir un rayon virtuel inverse 13, correspondant au trajet d'un rayon lumineux émis par la source 3 en sens inverse.

Le rayon virtuel inverse 13 entre dans le guide optique 5 par le dioptre de sortie 7 en étant incident selon la direction privilégiée 11a. Il est réfracté par le dioptre de sortie 7 et réfléchi au moins une fois par les parois latérales 15 du guide optique 5.

Une moitié 17a de la surface du dioptre d'entrée 9, disposée sur le trajet dudit rayon virtuel 13 est aménagée plane et perpendiculaire à celui-ci au niveau du dioptre d'entrée 9.

La source lumineuse 3 est disposée du côté du dioptre d'entrée 9, à l'intersection entre l'axe longitudinal *A* du guide optique et le trajet du rayon virtuel inverse 13.

De la sorte la lumière émise par la source 3 en direction de la portion de surface plane 17a remonte le trajet du rayon virtuel 13 et est émise au niveau du dioptre de sortie 7 sous forme de faisceau ayant une certaine ouverture angulaire *α* centrée sur la direction privilégiée 11a.

Ce faisceau correspond à l'image de la portion de surface plane 17a projetée le long du rayon virtuel 13, l'ouverture angulaire *α* variant en fonction de la taille de la portion de surface plane 17a et de l'éloignement de cette dernière à la source lumineuse 3. Le fait de placer ladite surface plane 17a plus près de la source 3 crée une ouverture *α* plus importante. A l'inverse, en éloignant la surface plane 17a de la source 3, l'ouverture *α* est moins importante.

Pour minimiser les pertes de puissance dues au réflexions sur les parois 15, la longueur du guide optique 5, du dioptre d'entrée 7 au dioptre de sortie 9, peut être adaptée pour que le rayon virtuel 13 ne soit réfléchi qu'une seule fois sur son trajet.

Pour permettre les réflexions et les réfractions de manière optimale, les parois latérales 15 et le dioptre d'entrée 9 du guide optique 3 doivent être polis avec un rendu de surface de l'ordre de 0,05 micromètres, inférieur à l'ordre de grandeur de la longueur d'onde utilisée. Le dioptre de sortie 7 est dépoli pour présenté une forte granularité favorisant la diffusion lumineuse pour un meilleur rendu visuel.

Dans le cas présent, l'autre moitié du dioptre d'entrée 9 forme une seconde surface plane 17b, obtenue par symétrie axiale d'axe *A*, à partir de la première surface 17a. Cette seconde surface plane 17b permet d'émettre, selon un principe tout a fait analogue, dans une seconde direction 11b, symétrique de la première direction 11a. L'essentiel du rayonnement de la source lumineuse 3 est alors partagé équitablement entre ces deux directions privilégiées 11 a, 11 b.

Un témoin lumineux 1 peut aussi avoir plus de deux portions de surface 17a, 17b chacune étant perpendiculaire à un rayon virtuel inverse 13, incident selon une direction 11a, 11b parmi plusieurs menant par exemple à des positions attendues d'au moins un utilisateur. Il est aussi possible de réduire la portion relative du dioptre d'entrée 9 qu'occupe au moins une des surfaces 17a, 17b afin de diminuer l'éclairage dans la direction 11 a ou 11 b lui correspondant.

La figure 2 montre de façon schématique l'intérieur de l'habitacle d'un véhicule, vu de dessus. Les usagers du véhicule 19, 21 sont assis dans leurs sièges 23, et font face au tableau de bord 25. Le tableau de bord 25 comporte plusieurs témoins lumineux 1.

Le guide optique 5 des témoins lumineux 1, dont seul le dioptre de sortie 7 est visible, comporte deux portions de surface planes 17, orientées de sorte à privilégier les directions 11a, 11b menant aux visages du conducteur 19 et du passager 21.

Il est aussi envisagé de ne privilégier qu'une des directions 11a ou 11b afin que le témoin lumineux 1 ne soit particulièrement visible que d'un des usagers 19 ou 21 du véhicule.

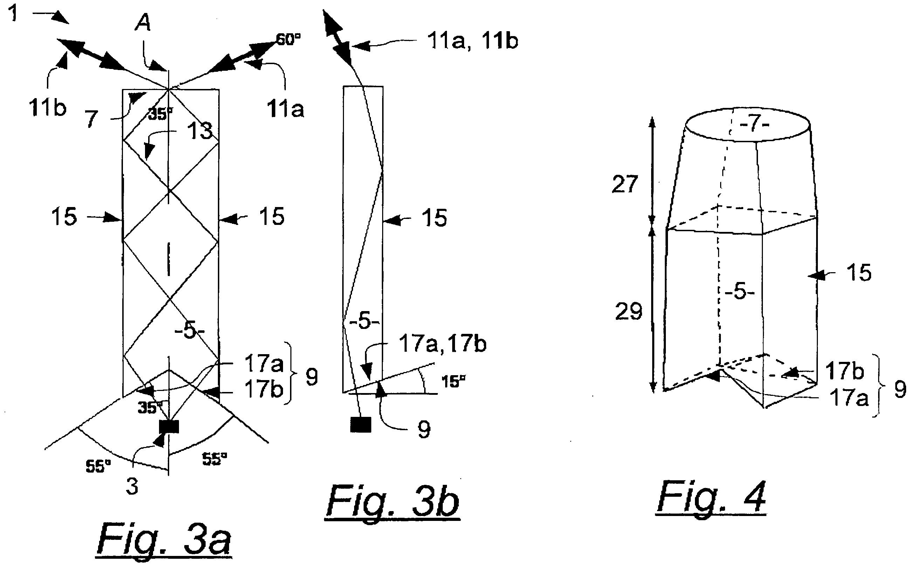

Les figures 3a et 3b montrent un mode de réalisation particulier du guide optique 5, pouvant être incorporé dans un tableau de bord 25 tel que précédemment décrit.

Sur la figure 3a, le dioptre d'entrée 9 du guide optique 5 présente une forme en V, ouvert en direction de la source lumineuse 3, composée de deux demi-surfaces 17a, 17b. Celles-ci forment dans le plan de la figure un angle de 55° avec l'axe longitudinal *A*. La longueur du guide optique 5 est telle que le rayon émis par la source perpendiculaire à l'une de demi-surfaces 17a, 17b est réfléchi trois fois sur les parois latérales 15 du guide optique 5 et ressort au niveau du dioptre de sortie 7 au centre de celui-ci.

La direction de sortie 11 a ou 11 b dudit rayon 13 est conditionnée par l'angle formé par la demi surface 17a ou 17b avec l'axe A et forme dans le cas présent avec un guide optique 5 en polycarbonate un angle d'environ 60°. Cet angle permet d'orienter la direction privilégiée 11a ou 11b dans un plan horizontal.

La figure 3b montre que les demi-surfaces 17a et 17b font avec la perpendiculaire à l'axe longitudinal A dans le plan de la figure un angle de 15°. Cet angle permet d'orienter la direction privilégiée 11a ou 11b dans un plan vertical. En particulier, la plage de valeur utilisée pour cet angle permet d'élever le faisceau à hauteur de visage à partir de la hauteur d'un tableau de bord 25 usuel.

En figure 4 est représenté une variante du guide optique 5 comportant une portion extrémale 27 côté dioptre de sortie 7 à section transversale de forme circulaire. La portion extrémale 27 à section circulaire est raccordée à la portion de section rectangulaire 29 par une transition progressive de la forme de la section transversale.

De la sorte, l'utilisateur voit une surface éclairée circulaire. De manière analogue, d'autres formes géométriques peuvent être obtenues.

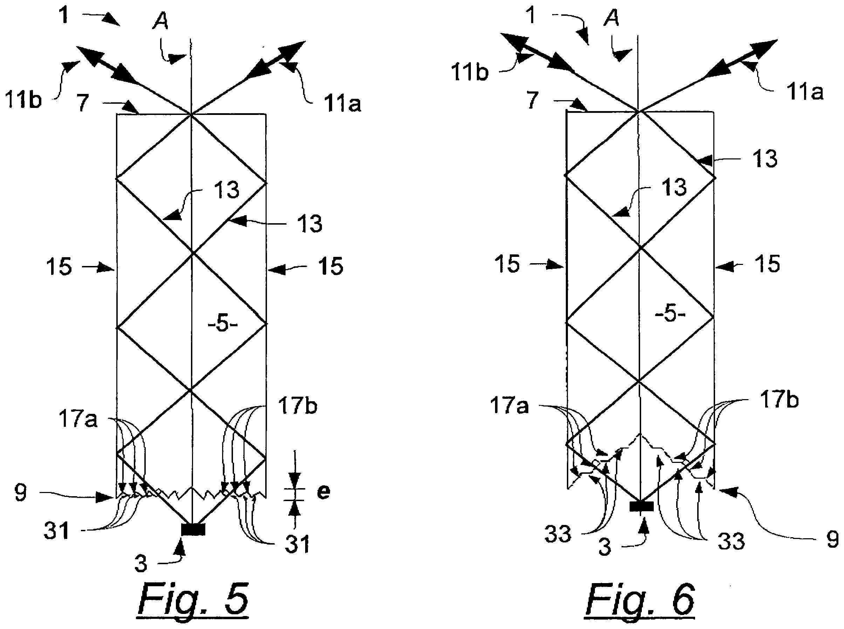

La figure 5 montre un mode de réalisation alternatif du témoin lumineux 1 à guide optique 5, inspiré des lentilles de Fresnel.

Le dioptre d'entrée 9 du guide optique 5 comporte pour chacune des directions privilégiées 11a, 11b une pluralité de portions de surface planes 17a, 17b parallèles entre elles et à une portion de surface plane orientée perpendiculairement au rayon virtuel inverse 13 correspondant à la direction 11a ou 11b considérée. Les portions de surface de chaque pluralité 17a, 17b sont toutes comprises dans une épaisseur prédéfinie e et séparées par des portions de surface 31 parallèles au rayon lumineux venant de la source incident à ce niveau du dioptre,

De tels guides optiques 5 permettent d'augmenter la compacité du témoin lumineux 1 le long de l'axe longitudinal *A*.

La figure 6 montre un second mode de réalisation du guide optique 5 d'un témoin lumineux 1.

Dans celui-ci, le dioptre d'entrée 9 du guide optique 5 comporte pour chacune de directions privilégiées 11 a, 11 b une pluralité de portions de surface planes 17a, 17b parallèles entre elles et à une portion de surface plane orientée perpendiculairement au rayon virtuel inverse 13 correspondant à la direction 11 a ou 11b considérée. Les portions de surface de chaque pluralité 17a, 17b sont séparées deux-à-deux par des portions de surface 33 perpendiculaires à l'axe longitudinal *A*.

Lesdites portions de surface 33 perpendiculaires à l'axe longitudinal *A* captent de la lumière transmise dans une ouverture angulaire centrée autour de l'axe longitudinal A, de manière à augmenter la luminosité du témoin lumineux 1 pour un observateur faisant face audit témoin et pour rendre l'apparence du témoin lumineux 1 plus homogène quand l'observateur change légèrement l'angle d'observation.

Le témoin lumineux 1 précédemment décrit permet d'éclairer de manière privilégiée certaines directions 11a, 11b au détriment des autres. De cette façon, le témoin lumineux n'est particulièrement visible que depuis certaines places (conducteur 19 ou passager 21) dans l'habitacle d'un véhicule, et une certaine économie de puissance d'éclairage peut être effectuée. Des diodes de moindre puissance, et donc de moindre coût peuvent alors être utilisées comme sources lumineuses 3. Lesdites diodes produisant aussi moins de chaleur, le mode de montage du témoin lumineux 1 dans le tableau de bord 25 requiert une optimisation moindre en terme d'évacuation de la chaleur.

## Revendications

1. Témoin lumineux (1) comportant :
- une source lumineuse (3),
- un guide optique (5), rigide et formant une colonne, comportant :
▪ un dioptre d'entrée (9) délimitant la surface inférieure du guide optique (5) et par lequel la lumière de la source (3) est admise dans le guide optique (5),
▪ un dioptre de sortie (7) délimitant la surface supérieure du guide optique (5) et par lequel la lumière de la source (3) est émise,
▪ une section rectangulaire transversale sur au moins une majeure partie (29) de sa longueur,
**caractérisé en ce que** pour au moins une ouverture angulaire (*α*) centrée sur une direction privilégiée (11 a, 11 b) de sortie, la source (3) est disposée du côté du dioptre d'entrée (9), à l'intersection entre l'axe longitudinal (A) du guide optique (5) et le trajet d'un rayon virtuel inverse (13), correspondant au trajet d'un rayon lumineux émis par la source (3) en sens inverse, le rayon virtuel inverse (13) entrant dans le guide optique (5) par le dioptre de sortie (7) en étant incident selon la direction privilégiée (11a, 11 b), réfracté par le dioptre de sortie (7) et réfléchi au moins une fois par des parois latérales (15) du guide optique (5), et **en ce que** le dioptre d'entrée (9) du guide optique (5) comporte une portion de surface plane (17a, 17b), disposée sur le trajet dudit rayon virtuel (13) et perpendiculaire à celui-ci au niveau du dioptre d'entrée (9).

2. Témoin lumineux selon la revendication 1, **caractérisé en ce que** la source lumineuse (3) est une diode électroluminescente.

3. Témoin lumineux selon la revendication 1 ou 2, **caractérisé en ce que** le guide optique (5) est réalisé en plastique dur.

4. Témoin lumineux selon la revendication 3, **caractérisé en ce que** le plastique dur est du polyméthacrylate de méthyle.

5. Témoin lumineux selon la revendication 3, **caractérisé en ce que** le plastique dur est du polycarbonate.

6. Témoin lumineux selon l'une au moins des revendications 1 à 5, **caractérisé en ce que** les parois latérales (15) et le dioptre d'entrée (9) sont polis avec un rendu de surface inférieur à 0,05 microns.

7. Témoin lumineux selon l'une au moins des revendications précédentes, **caractérisé en ce que** le guide optique (5) présente une portion extrémale (27) côté dioptre de sortie (9) à section transversale de forme circulaire, la portion extrémale à section circulaire (27) étant raccordée à la portion de section rectangulaire (29) par une transition progressive de la forme de la section transversale.

8. Témoin lumineux selon l'une au moins des revendications précédentes, **caractérisé en ce que** le dioptre d'entrée (9) du guide optique (5) comporte une pluralité de portions de surface planes (17a, 17b), chacune étant perpendiculaire à un rayon virtuel inverse (13) respectif, incident selon une direction privilégiée parmi plusieurs directions (11a, 11 b).

9. Témoin lumineux selon l'une au moins des revendications précédentes, **caractérisé en ce que** le dioptre d'entrée (9) du guide optique (5) comporte une pluralité de portions de surface planes (17a, 17b) parallèles entre elles, une des portions de surface plane (17a, 17b) étant orientée perpendiculairement à un rayon virtuel inverse (13) au niveau du dioptre d'entrée (9), comprises dans une épaisseur prédéfinie (e) et séparées par des portions de surface (31) parallèles au rayon venant de la source incident à ce niveau du dioptre.

10. Témoin lumineux selon l'une au moins des revendications 1 à 8, **caractérisé en ce que** le dioptre d'entrée (9) du guide optique (5) comporte une pluralité de portions de surface planes (17a, 17b) parallèles entre elles, une des portions de surface plane (17a, 17b) étant orientée perpendiculairement à un rayon virtuel inverse (13) au niveau du dioptre d'entrée (9), séparées par des portions de surface (33) perpendiculaires à l'axe optique *A*.

11. Témoin lumineux selon l'une au moins des revendications précédentes, **caractérisé en ce que** la longueur du guide optique entre le dioptre de sortie (7) et le dioptre d'entrée (9) est telle que le rayon virtuel inverse (13) est réfléchi une seule fois sur une paroi latérale (15) sur son trajet.

12. Tableau de bord (25) de véhicule automobile, **caractérisé en ce qu'**il comporte au moins un témoin lumineux (1) selon l'une au moins des revendications précédentes, et **en ce que** la direction privilégiée (11a, 11 b) correspond à la position attendue d'un utilisateur (19, 21) du véhicule.

13. Tableau de bord selon la revendication 12, **caractérisé en ce qu'**il comporte au moins un témoin lumineux (1) selon au moins la revendication 8, et **en ce que** les directions privilégiées (11 a, 11 b) sont au nombre de deux, et correspondent aux positions attendues du conducteur (19) et du passager (21) du véhicule dans l'habitacle.

## Patentansprüche

1. Kontrollleuchte (1), die aufweist:
- eine Lichtquelle (3),
- einen steifen und eine Säule bildenden Lichtleiter (5), der aufweist:
• ein Eingangs-Diopter (9), das die Unterseite des Lichtleiters (5) begrenzt und durch das das Licht von der Quelle (3) in den Lichtleiter (5) eingelassen wird,
• ein Ausgangs-Diopter (7), das die Oberseite des Lichtleiters (5) begrenzt und durch das das Licht von der Quelle (3) emittiert wird,
• einen rechtwinkligen Querschnitt über mindestens einen größeren Teil (29) seiner Länge,
**dadurch gekennzeichnet, dass** für mindestens einen auf eine bevorzugte Ausgangsrichtung (11a, 11b) zentrierten Öffnungswinkel (α) die Quelle (3) auf der Seite des Eingangs-Diopters (9) an der Schnittstelle zwischen der Längsachse (A) des Lichtleiters (5) und der Strecke eines inversen virtuellen Strahls (13) entsprechend der Strecke eines von der Quelle (3) emittierten Lichtstrahls in umgekehrter Richtung angeordnet ist, wobei der inverse virtuelle Strahl (13) in den Lichtleiter (5) über das Ausgangs-Diopter (7) eintritt, indem er gemäß der bevorzugten Richtung (11a, 11b) einfällt, vom Ausgangs-Diopter (7) gebrochen und mindestens einmal von Seitenwänden (15) des Lichtleiters (5) reflektiert wird, und dass das Eingangs-Diopter (9) des Lichtleiters (5) einen ebenen Flächenabschnitt (17a, 17b) aufweist, der auf der Strecke des virtuellen Strahls (13) und lotrecht zu diesem im Bereich des Eingangs-Diopters (9) angeordnet ist.

2. Kontrollleuchte nach Anspruch 1, **dadurch gekennzeichnet, dass** die Lichtquelle (3) eine Elektrolumineszenzdiode ist.

3. Kontrollleuchte nach Anspruch 1 oder 2, **dadurch gekennzeichnet, dass** der Lichtleiter (5) aus Hartplastik hergestellt ist.

4. Kontrollleuchte nach Anspruch 3, **dadurch gekennzeichnet, dass** die Hartplastik Polymethylmethacrylat ist.

5. Kontrollleuchte nach Anspruch 3, **dadurch gekennzeichnet, dass** die Hartplastik Polycarbonat ist.

6. Kontrollleuchte nach mindestens einem der Ansprüche 1 bis 5, **dadurch gekennzeichnet, dass** die Seitenwände (15) und das Eingangs-Diopter (9) poliert sind, mit einer Oberflächendarstellung von weniger als 0,05 Mikron.

7. Kontrollleuchte nach mindestens einem der vorhergehenden Ansprüche, **dadurch gekennzeichnet, dass** der Lichtleiter (5) auf der Seite des Ausgangs-Diopters (9) einen Endabschnitt (27) mit kreisförmigem Querschnitt aufweist, wobei der Endabschnitt mit kreisförmigem Querschnitt (27) durch einen progressiven Übergang der Form des Querschnitts an den Abschnitt mit rechtwinkligem Querschnitt (29) anschließt.

8. Kontrollleuchte nach mindestens einem der vorhergehenden Ansprüche, **dadurch gekennzeichnet, dass** das Eingangs-Diopter (9) des Lichtleiters (5) eine Vielzahl von ebenen Flächenabschnitten (17a, 17b) aufweist, die je lotrecht zu einem inversen virtuellen Strahl (13) sind, der gemäß einer bevorzugten Richtung unter mehreren Richtungen (11a, 11b) einfällt.

9. Kontrollleuchte nach mindestens einem der vorhergehenden Ansprüche, **dadurch gekennzeichnet, dass** das Eingangs-Diopter (9) des Lichtleiters (5) eine Vielzahl von zueinander parallelen ebenen Flächenabschnitten (17a, 17b) aufweist, wobei einer der ebenen Flächenabschnitte (17a, 17b) lotrecht zu einem inversen virtuellen Strahl (13) im Bereich des Eingangs-Diopters (9) ausgerichtet ist, die in einer vordefinierten Dicke (e) enthalten sind und durch Flächenabschnitte (31) parallel zum von der Quelle kommenden Strahl getrennt werden, der in diesem Bereich des Diopters einfällt.

10. Kontrollleuchte nach mindestens einem der Ansprüche 1 bis 8, **dadurch gekennzeichnet, dass** das Eingangs-Diopter (9) des Lichtleiters (5) eine Vielzahl von zueinander parallelen ebenen Flächenabschnitten (17a, 17b) aufweist, wobei einer der ebenen Flächenabschnitte (17a, 17b) lotrecht zu einem inversen virtuellen Strahl (13) im Bereich des Eingangs-Diopters (9) ausgerichtet ist, die durch Flächenabschnitte (33) lotrecht zur optischen Achse A getrennt werden.

11. Kontrollleuchte nach mindestens einem der vorhergehenden Ansprüche, **dadurch gekennzeichnet, dass** die Länge des Lichtleiters zwischen dem Ausgangs-Diopter (7) und dem Eingangs-Diopter (9) derart ist, dass der inverse virtuelle Strahl (13) auf seiner Strecke ein einziges Mal auf einer Seitenwand (15) reflektiert wird.

12. Armaturenbrett (25) eines Kraftfahrzeugs, **dadurch gekennzeichnet, dass** es mindestens eine Kontrollleuchte (1) nach mindestens einem der vorhergehenden Ansprüche aufweist, und dass die bevorzugte Richtung (11a, 11b) der erwarteten Position eines Benutzers (19, 21) des Fahrzeugs entspricht.

13. Armaturenbrett nach Anspruch 12, **dadurch gekennzeichnet, dass** es mindestens eine Kontrollleuchte (1) nach mindestens Anspruch 8 aufweist, und dass es zwei bevorzugte Richtungen (11a, 11b) gibt, die den erwarteten Positionen des Fahrers (19) und des Beifahrers (21) des Fahrzeugs im Fahrzeuginnenraum entsprechen.

## Claims

1. Warning light (1) comprising:
- a light source (3); and
- a rigid light guide (5) forming a column, comprising:
▪ an input dioptre (9) bounding the lower surface of the light guide (5) and via which light from the source (3) enters the light guide (5),
▪ an output dioptre (7) bounding the upper surface of the light guide (5) and via which light from the source (3) is emitted, and
▪ a rectangular cross section (29) over at least most of its length,
**characterized in that**, for at least one angular aperture (α) centered on a privileged output direction (11a, 11b), the source (3) is placed beside the input dioptre (9) at the intersection between the longitudinal axis (A) of the light guide (5) and the path of a reverse virtual ray (13) corresponding to the path of a light ray emitted by the source (3) traveled in reverse, the reverse virtual ray (13) being incident on the light guide (5) in the privileged direction (11a, 11b) and entering therein via the output dioptre (7), refracted by the output dioptre (7) and reflected at least once by sidewalls (15) of the light guide (5), and **in that** the input dioptre (9) of the light guide (5) comprises a flat surface portion (17a, 17b), placed on the path of said virtual ray (13) and perpendicular to the latter at the input dioptre (9).

2. Warning light as claimed in Claim 1, **characterized in that** the light source (3) is a light-emitting diode.

3. Warning light as claimed in either of Claims 1 and 2, **characterized in that** the light guide (5) is made of a hard plastic.

4. Warning light as claimed in Claim 3, **characterized in that** the hard plastic is polymethyl methacrylate.

5. Warning light as claimed in Claim 3, **characterized in that** the hard plastic is polycarbonate.

6. Warning light as claimed in at least one of Claims 1 to 5, **characterized in that** the sidewalls (15) and the input dioptre (9) are polished having a surface roughness smaller than 0.05 microns.

7. Warning light as claimed in at least one of the preceding claims, **characterized in that** the light guide (5) has an end portion (27) of circular cross section beside the output dioptre (9), the end portion (27) of circular cross section being connected to the portion (29) of rectangular cross section via a gradual transition in the shape of the cross section.

8. Warning light as claimed in at least one of the preceding claims, **characterized in that** the input dioptre (9) of the light guide (5) comprises a plurality of flat surface portions (17a, 17b), each lying perpendicular to a respective reverse virtual ray (13) incident in a direction (11a, 11b) privileged over a number of other directions.

9. Warning light as claimed in at least one of the preceding claims, **characterized in that** the input dioptre (9) of the light guide (5) comprises a plurality of flat surface portions (17a, 17b) lying parallel to one other, one of the flat surface portions (17a, 17b) being oriented perpendicularly to a reverse virtual ray (13) at the input dioptre (9), contained in a preset thickness (e) and separated by surface portions (31) lying parallel to the ray coming from the source incident here on the dioptre.

10. Warning light as claimed in at least one of Claims 1 to 8, **characterized in that** the input dioptre (9) of the light guide (5) comprises a plurality of flat surface portions (17a, 17b) lying parallel to one another, one of the flat surface portions (17a, 17b) being oriented perpendicularly to a reverse virtual ray (13) at the input dioptre (9), separated by surface portions (33) lying perpendicular to the optical axis A.

11. Warning light as claimed in at least one of the preceding claims, **characterized in that** the length of the light guide between the output dioptre (7) and the input dioptre (9) is such that the reverse virtual ray (13) is reflected just once by a sidewall (15) on its path.

12. Dashboard (25) for an automotive vehicle, **characterized in that** it comprises at least one warning light (1) as claimed in at least one of the preceding claims, and **in that** the privileged direction (11a, 11b) corresponds to the expected position of a user (19, 21) of the vehicle.

13. Dashboard as claimed in Claim 12, **characterized in that** it comprises at least one warning light (1) according to at least Claim 8, and **in that** the privileged directions (11a, 11b) are two in number, and correspond to the expected positions of the driver (19) and the passenger (21) of the vehicle in the passenger compartment.
